# EUROPEAN PATENT SPECIFICATION

(11) **EP 0 934 135 B1**
(45) Date of publication and mention of the grant of the patent: **14.08.2002**
(21) Application number: 98931168.3
(22) Date of filing: 15.06.1998
(51) Int. Cl.: B23B 29/06, B23B 29/08

(54) **TOOL COUPLING AND METHOD FOR COUPLING TWO TOOL PARTS**
WERKZEUGKUPPLUNG UND METHODE ZUM KUPPLUNG ZWEIER WERKZEUGELEMENTEN
COUPLAGE D'OUTIL ET PROCEDE DE COUPLAGE DE DEUX ELEMENT OUTILS

(30) Priority: 30.06.1997 SE 9702500
(43) Date of publication of application: 11.08.1999
(73) Proprietor: SECO TOOLS AB, S-737 82 Fagersta (SE)
(72) Inventor: RYDBERG, Christer, S-737 31 Fagersta (SE); KOSKINEN, Jorma, S-737 33 Fagersta (SE)
(74) Representative: Taquist, Lennart
(86) International application number: PCT/SE98/01146
(87) International publication number: WO 99/00208

(56) References cited:
- DE-A- 3 446 455
- US-A- 2 623 272
- US-A- 2 779 992

## Description

### Background of the invention

The present invention relates to a coupling, a tool, a cutting head. a holder, a shim and a method according to the preamble of respective independent claim.

### Prior art

Through DE-A1-34 46 455 representing the closest prior art is previously known a turning tool of the above-mentioned type. The known tool has four teeth at the lower side of the cutting insert which cooperate with corresponding grooves in the holder. The strain on each individual groove becomes large and the wear leads subsequently to poor precision in the machining result. The same applies for a tool according to DE-C2-34 48 086 and DE-OS-19 50 718 which include radially projecting teeth.

Through CA-A-2,170,450 is another turning tool of the above type previously known, wherein a lower side of a shim is provided with a fine pattern of protrusions intended to directly stamp a corresponding pattern into the holder at turning. Said stamping will however happen successively and therefore the screw which holds the cutting insert looses clamping force and must be retightened. In addition the repetitive accuracy becomes bad at exchange of shim since it is almost impossible to find the original position again but new stamping must be made so that the locking effect deteriorates for each exchange.

Further is referred to applicants SE-A-9404266-0 and SE-A-9501687-9 which show tool with cooperating grooves and teeth provided in one direction.

### Objects of the invention

One object of the present invention is to provide a universal coupling for two tool parts, whereby a great torque can be transferred.

Another object of the present invention is to provide a tool which is continuously rigid.

Still another object of the present invention is to provide a tool with good precision.

Still another object of the present invention is to provide a holder and a cutting head which are simple to assemble.

These and other objects have been achieved by a coupling, a tool, a cutting head, a holder, a shim and a method such as they are defined in the appended claims.

### Description of the drawings

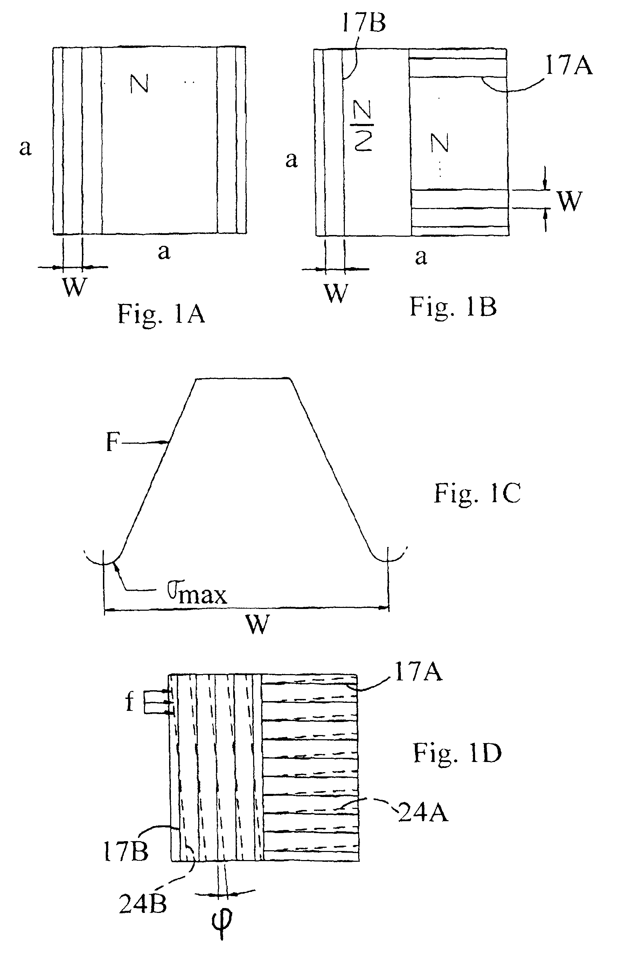

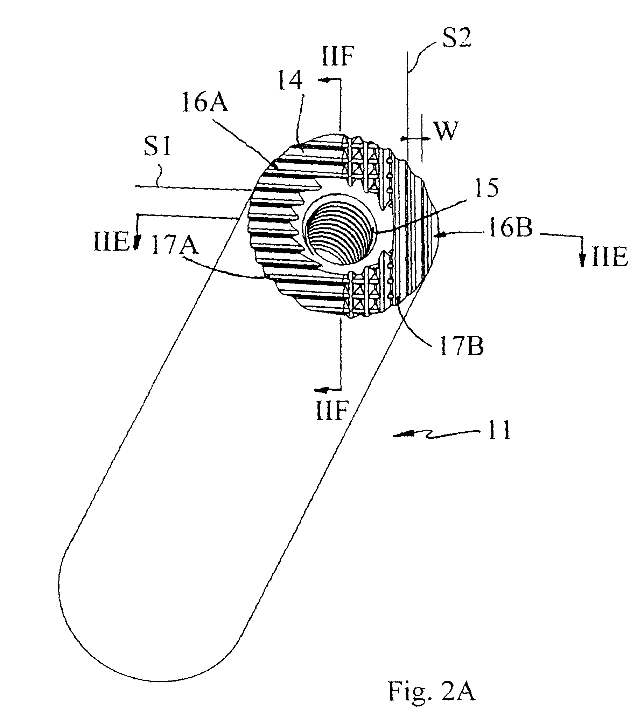

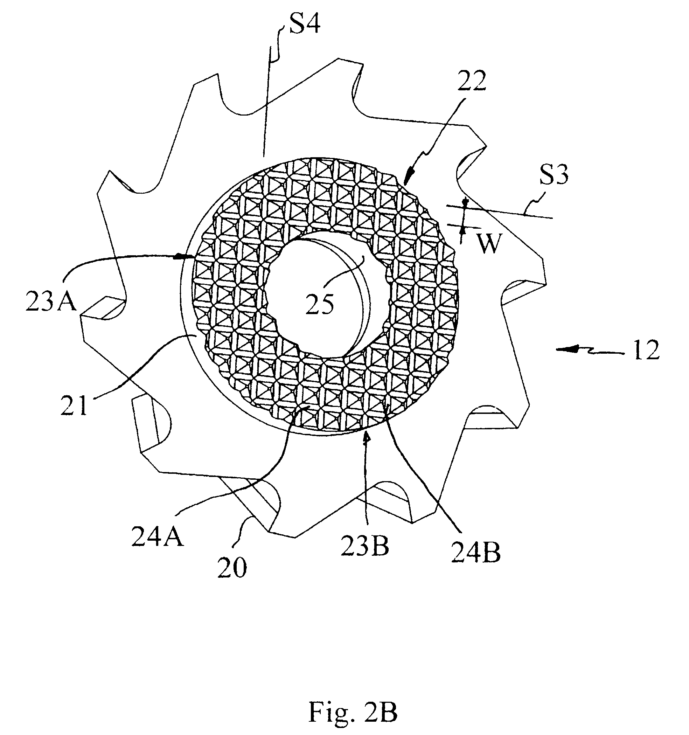

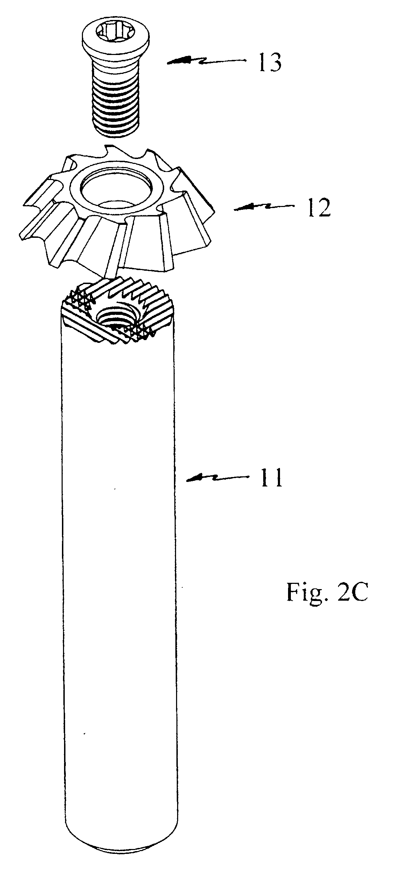

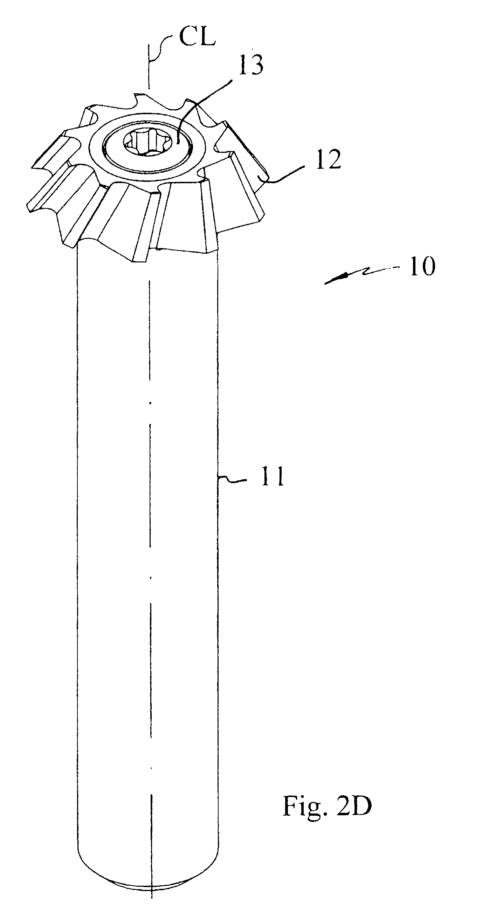

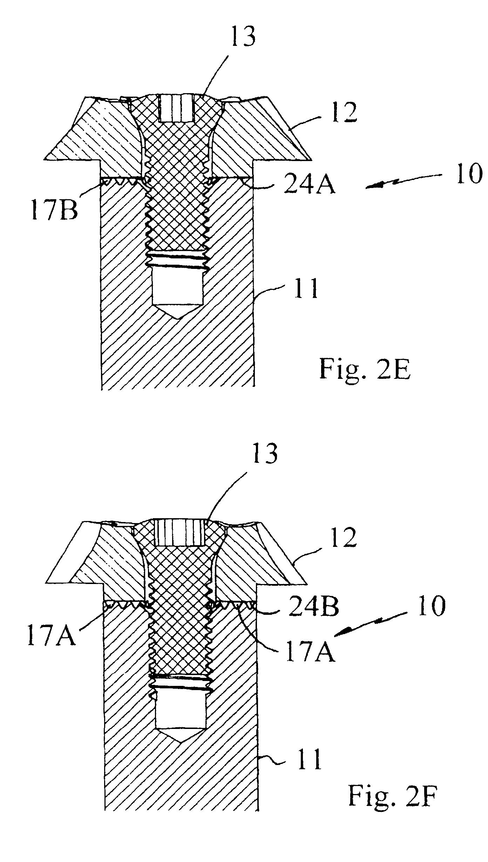

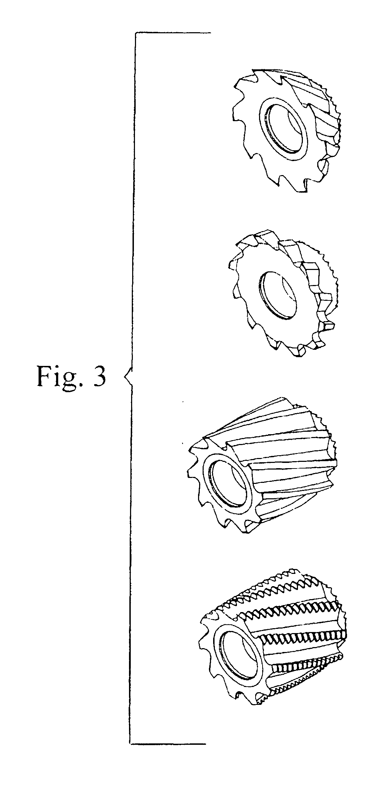

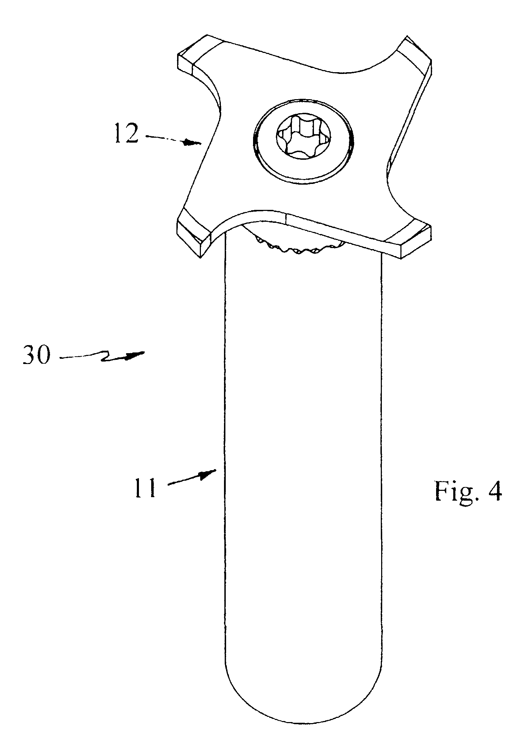

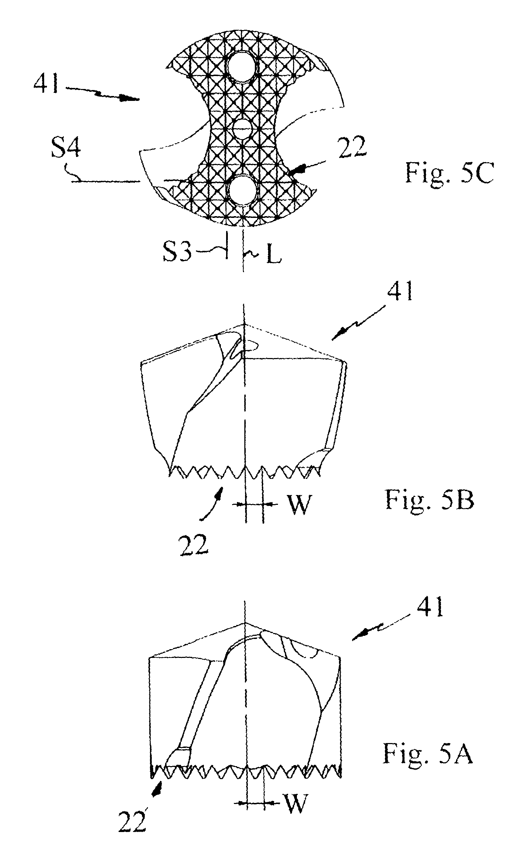

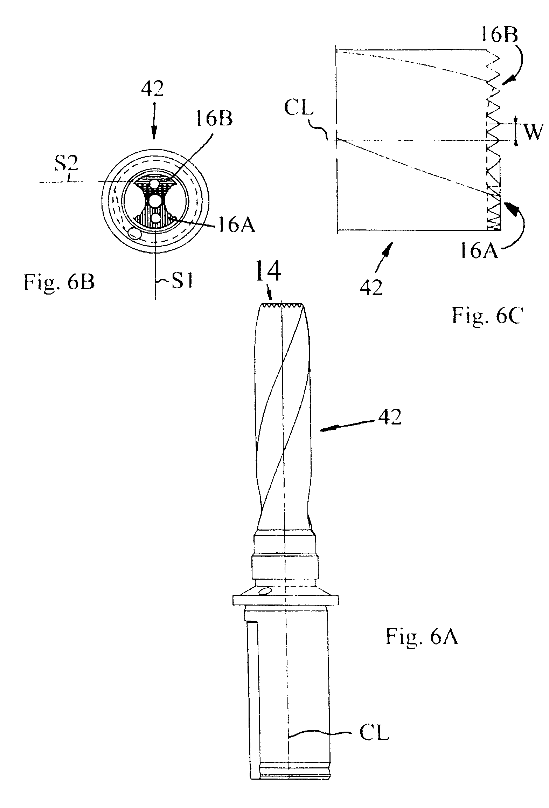

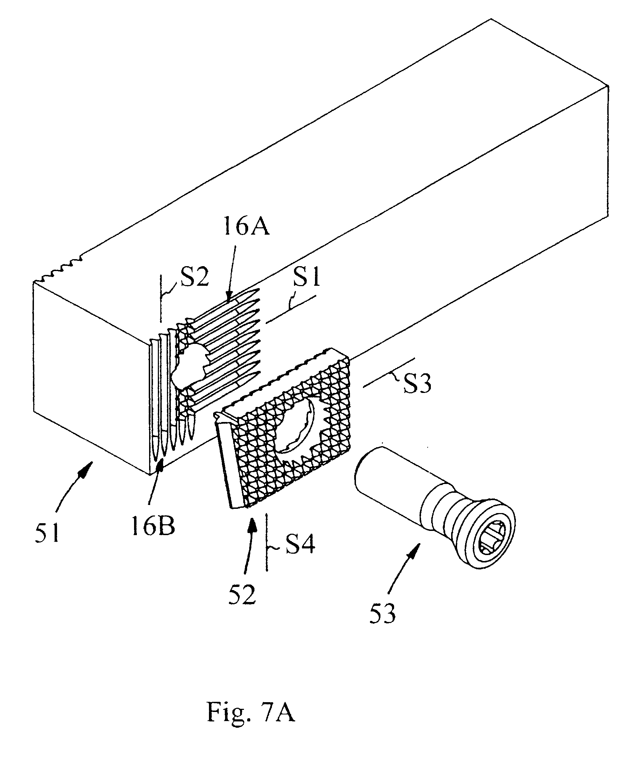

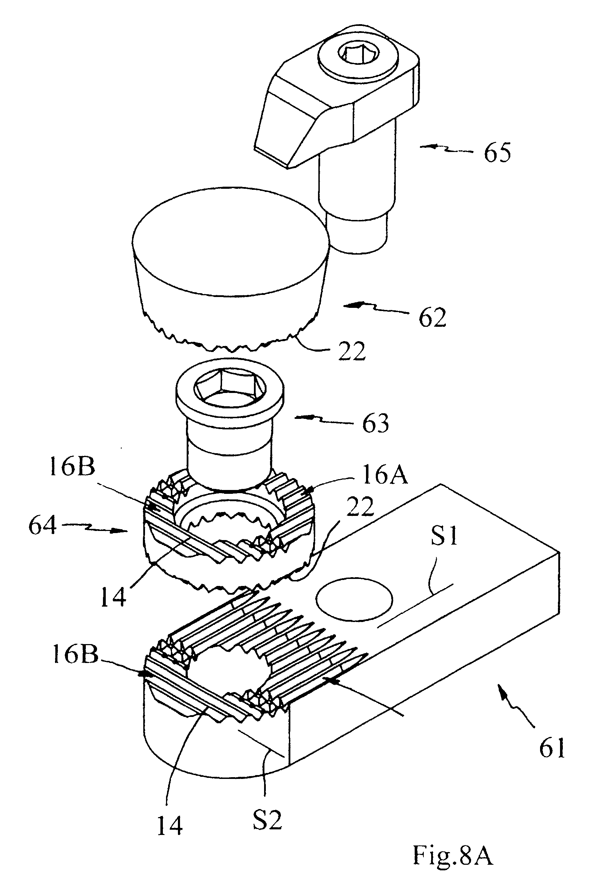

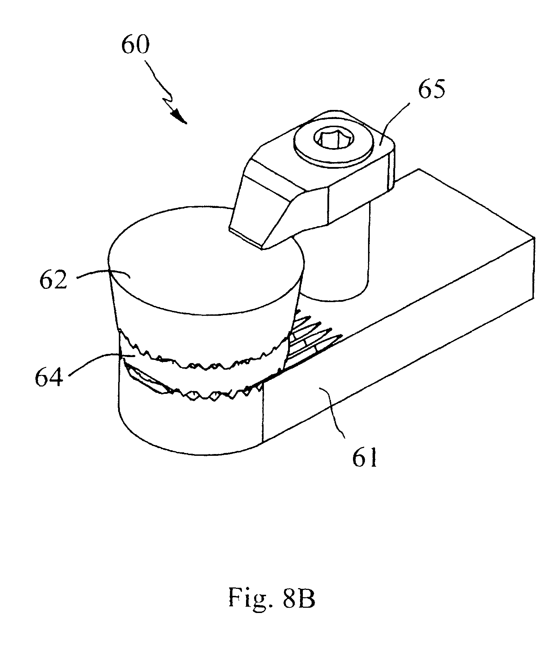

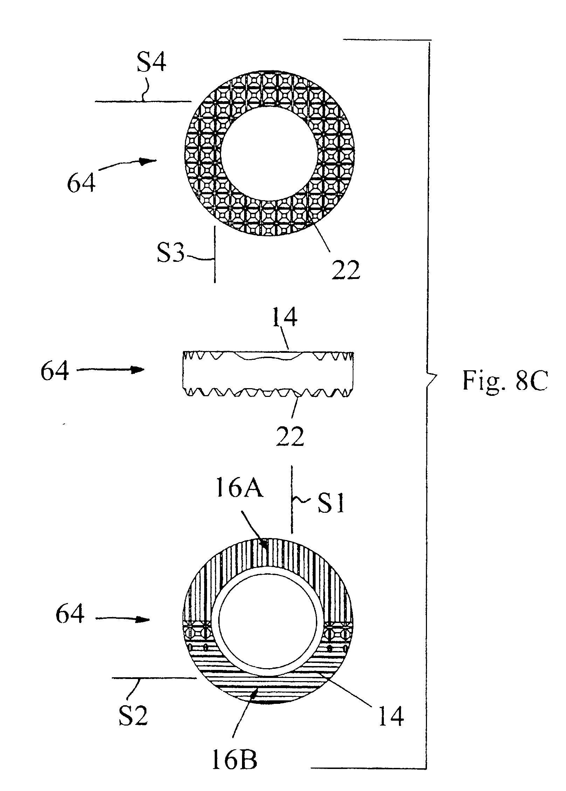

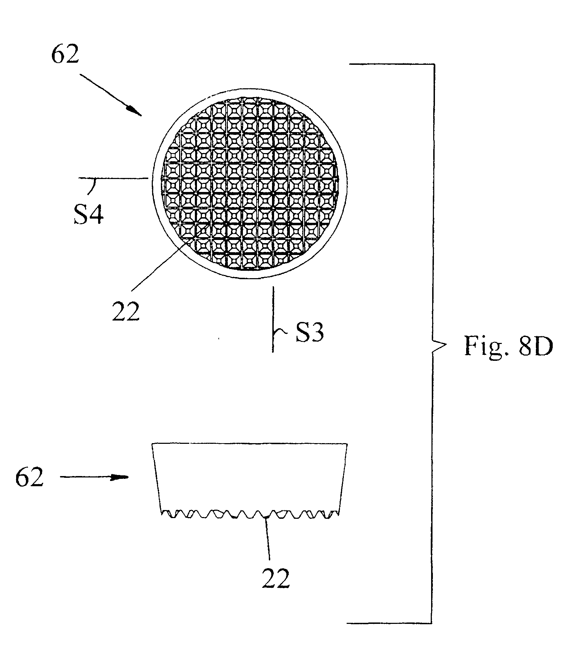

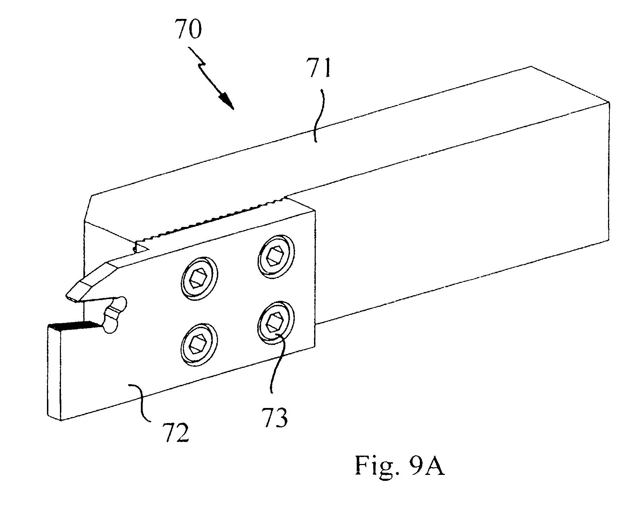

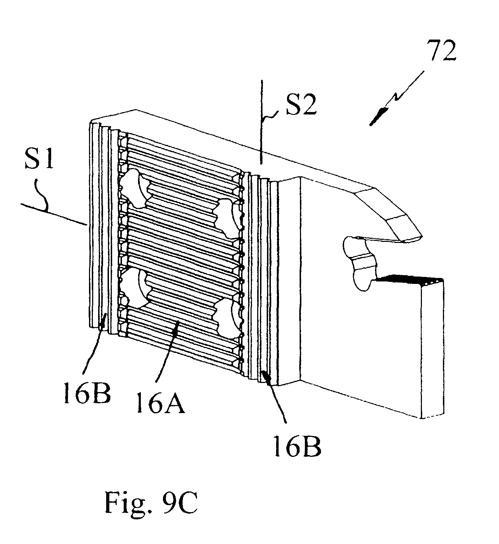

Fig. 1A schematically shows a known coupling surface; Fig. 1B schematically shows a coupling surface according to the present invention; Fig. 1C shows an area between two V-grooves; Fig. 1D schematically shows a coupling surface according to the present invention in an unloaded and biased condition; Fig. 2A shows a holder according to the present invention in a perspective view; Fig. 2B shows a cutting head according to the present invention in a perspective view; Fig. 2C shows a tool according to the present invention in an exploded view; Fig. 2D shows a tool according to the present invention in a perspective view; Fig. 2E and 2F show cross sections corresponding lines IIE-IIE and IIF-IIF in Fig. 2A; Fig. 3 shows alternative embodiments of the cutting heads according to the present invention in perspective views; Fig. 4 shows an alternative embodiment of a tool according to the present invention in a perspective view; Figs. 5A-C show an alternative embodiment of a cutting head according to the present invention in two side views and a bottom view, respectively; Figs. 6A-C show an alternative embodiment of a holder according to the present invention in a side view, a top view and an enlarged side view, respectively; Figs. 7A-B show an alternative embodiment of a tool according to the present invention in an exploded view and in a perspective view, respectively; Figs. 8A-B show an alternative embodiment of a tool according to the present invention, respectively, in an exploded view and in a perspective view; Fig. 8C shows, from above and downwards, a shim in a bottom view, a side view and a top view, respectively; Fig. 8D shows an alternative embodiment of a cutting head according to the present invention in a bottom view and in a side view; Figs. 9A-C show an alternative embodiment of a tool, a holder and a cutting head according to the present invention in perspective views.

### Technical analysis of transferred torques in couplings

Hereinafter follows a technical analysis of founding theory behind the present invention. Look at a square surface with the length of the side a which has N pieces of milled longitudinally parallel grooves with a width or partition W, see Fig. 1A. Relative to an opposite surface with a similar groove is assumed that for an individual groove a relative torsion can be made within an angle ϕ1. This can be said to be the measure of the gap between both surfaces for a groove. When N pieces of grooves simultaneously influence each other a cooperation is obtained which reduces the total relative torsion inverted proportionally with the number of grooves according to:$\text{ϕ= ϕ1/N}$

Now look at the same surface but with N/2 pieces of grooves milled along half the length, a/2. On the other half there are N pieces of grooves with the same profile and partition as above but milled 90° in relation to the other grooves, see Fig. 1b. When an opposite surface, with N+N pieces of grooves milled 90° relative to each other, influences the other surface an engagement is attained between total N+N/2 pieces of grooves. If the relative torsion for a groove is as before ϕ1, the total relative torsion obtained is$\text{ϕ = ϕ1/(N+N/2) = 2ϕ1/3N}$

That is, the total torsion/movement in this coupling is 33% smaller than in the known connection.

Look at a profile of a ridge between two grooves according to Fig. 1c. The strain on a flank will lead to a maximum tension at the radius which becomes dimensioning for how much load the coupling can carry (or in other words maximum transferable torque). Since the profile extends in the depth direction the tension will depend on strain per length unit, i. e. the longer the flank distance that a given load can be distributed on, the lower tension becomes. The spread of the load is in turn dependent of the relative torsion between the both parts of the joint.

An ideal coupling has contact along the entire groove in all grooves. But in practice one knows that contact will arise along the verge of the surfaces at torsional load, see Fig. 1D. The extension of the load is therefore directly dependent on the relative torsion in the coupling. For a given torque the tension in the profile will therefore change proportionally to the relative torsion in the coupling. If the maximum tension in the profile is σmax it is calculated for a strain f (n/mm) according to$\text{σmax = f * c}$

Where the function c depends on material and on the profile geometry.

For a given torque m and x pieces of flanks (the same in Figs. 1A and 1B, 2n and 2(n/2)+n), respectively, then$\text{f ∼ ϕ}$

The coupling in Fig. 1B can in other words transfer a torque which is 1/(2/3) * 100% = 50% bigger than the coupling in Fig. 1A.

### Detailed description of preferred embodiments of the invention

Said theoretical reasoning constitutes the basis for a number of embodiments of the invention, of which some are described hereinafter.

Figs. 2A to 2D show a tool 10 for milling including a substantially cylindrical holder 11, a multi-edged cutting head 12 and a screw 13.

The holder 11 can be made of steel, cemented carbide or high speed steel. One free end of the holder 11 is intended to be fastened in a rotatable spindle (not shown) in a milling machine while the opposed second free end comprises a front surface 14 and a threaded hole 15. The threaded hole 15 has a conical entering bevel. The front surface 14 has a circular basic shape and comprises two groove parts 16A, 16B. Each groove part covers substantially half the front surface 14 and comprises a number of from each other separate, identical flutes or grooves 17A, 17B. The grooves in the groove parts have two main directions S1, S2, which are perpendicular to each other. A second groove part 16A is bordered by a first groove part 16B. Substantially each groove 17B in the first groove part 16B intersects the jacket surface of the holder in two places, while substantially each groove 17A in the second groove part 16A intersects the jacket surface of the holder in one place. Each groove 17A, 17B is elongated as well as substantially v-shaped in cross-section. Each groove has a largest partition or width W and a depth. The width W is in the magnitude of 0,2 to 2 mm, preferably around 1,5 mm. Each groove has two flanks which, via a sharp or rounded transition, connects to a bottom. The flanks form an acute angle with each other. The angle lies in the interval 40° to 80°, preferably 55° to 60°. Each surface is preferably planarly formed and connects to the associated flank via an obtuse inner, soft or sharp, transition. The number of grooves in each groove part depends of how the support surface of the cutting head is formed and the number is chosen in the interval 5 to 20 grooves. The bottom can alternatively be described with a radius of about 0,2 to 0,4 mm. The design of the groove parts 16A, 16B gives a considerably bigger specific surface than if these should be planar. The groove parts 16A, 16B cover at least 80%, preferably 90-100%, of the accessible area of the front surface 14.

In the embodiment shown in Figs. 2A-2D the first groove part 16B has been made, through hobbing or grinding, with feed direction parallel with the direction S2. Subsequently the second groove part 16A has been machined with the same tool in direction parallel with the direction S1. To obtain full depth in each groove 17A in the second groove part 16A it is appropriate that the tool is fed somewhat into the first groove part 16B. Then said tool will also machine material of the first groove part 16B, which appears from for example Fig. 2A, wherein completely or partly pyramid shaped projections are formed at the termination of the second groove part 16A in the first groove part 16B. In the shown embodiment the area of the second groove part 16A is somewhat bigger than the area of the first groove part 16B. Consequently the second groove part 16A comprises twelve grooves 17A while the first groove part 16B comprises six grooves.

In Fig. 2B the cutting head 12 is shown in a perspective view from below. The head can be made from cemented carbide, cermet or high speed steel and can be used for milling of dove tail slots. The head has the basic shape of a truncated cone and comprises ten cutting edges 20, which are provided at the periphery of the conical head. The cutting edges are surrounded by conventional chip and clearance surfaces as well as chip spaces. The head has an integral neck 21 equipped with a support surface 22. The support surface 22 has a circular basic shape and comprises two groove parts 23A, 23B. Each groove part covers substantially the entire support surface 22 and comprises a number of from each other separate, identical flutes or grooves 24A, 24B. The grooves in the groove parts have two main directions S3, S4, which are perpendicular to each other. The groove parts 23A, 23B in the cutting head 12 wholly transverse each other, i.e. they do not end within the support surface except for where holes are provided. Substantially each groove 24A, 24B in both groove parts 23A, 23B intersects the jacket surface of the holder at two places. Each groove 24A, 24B is elongated and substantially v-shaped in cross-section. Each groove has a largest width W and a depth. Each groove has two flanks which, via a sharp or rounded transition, connect to a bottom. The flanks form an acute angle with each other. The angle lies in the interval of 40° to 80°, preferably 55° to 60°. Each surface is preferably planarly formed and connects to the associated flank via an obtuse inner, soft or sharp, transition. The number of grooves in each groove part depends of how the front surface of the holder is formed and the number is chosen in the interval of 5 to 20 grooves. The bottom may alternatively be described by a radius of about 0,2 to 0,4 mm. The design of the groove parts 23A, 23B give a considerably larger specific surface than if this would be planar. The groove parts 23A, 23B cover at least 80%, preferably 90-100%, of the accessible area on the support surface 22. The groove parts 23A, 23B are displaced relative to the tool's axis of rotation CL a distance W/2 relative to both directions S1 and S2 for the groove parts 16A and 16B of the holder 11. The head has an unthreaded hole 25 to receive a screw or any other clamping means. The clamping means may alternatively be developed as an internal pull rod, wherein the hole 25 comprises an integral thread which cooperates with a threaded free end of the pull rod. At said alternative the possibility to provide cutting edges towards the rotational axis for drilling is obtained. In the in Fig. 2B shown embodiment the groove parts 23A, 23B have been made through direct pressing and sintering or through grinding.

The milling tool 10 is mounted by putting the support surface 22 of the cutting head 12 by hand against the front surface 14 of the holder 11 in one of four possible positions. Thereby the groove directions S3 and S4 are aligned with the groove directions S1 and S2, respectively. The screw 13 is brought through the insert hole 25 and against the threaded hole 15. At rotation of the screw 13 via a key which is in engagement with the key grip, the cutting head will be drawn firmly against the front surface, i.e. the position according to Fig. 2D has been achieved. The cutting head 12 is now anchored in the holder 11 in a satisfactory manner.

The reason for that only one surface should have waffle pattern over its entire area is that the tool obtains a more distinct locking effect than if both the surfaces would be waffle patterned.

When the cutting head 12 shall be exchanged the mounting process is inverted, whereafter the cutting head can be removed from the holder 11 and be exchanged. Thereby also the cutting head geometry can be exchanged to some of the embodiments shown in Fig. 3, which all fits to the same holder. From left to right in Fig. 3 is shown a chip dividing cylindrical end mill head or thread milling cutter; a not chip dividing cylindrical head for example for end mill cutting or reaming; a head for grooving and a truncated conical head for end mill cutting of dove tail slots, the latter having a cone apex directed towards the holder. Common for all these tool is that they replace conventional end mills in high speed steel where smaller dimensions (5 to 15 mm in diameter) often are desirable.

Fig. 4 shows a milling tool for grooving or a grooving tool 30, wherein the holder 11 and the cutting head 12 comprise a front surface and a support surface, respectively, such as described above. In case the tool shall be used for milling then only one position relative to the cooperating surfaces is needed. If the tool shall be used for turning in the shown case four different positions for the head are required to be able to index all cutting edges into active position. At indexing the groove part 23A alternately will be in contact with the groove parts 16A and 16B. The same applies for the groove part 23B.

The embodiment of a tool according to the invention shown in Figs. 5A-6C is a so called helix drill, which comprises a cutting head 41, a drill body 42, a pull rod as well as a nut (not shown).

The cutting head 41 is provided with at least one cutting edge for drilling at the end facing away from the drill body 42. The cutting head 41 is made by hard material, preferably cemented carbide and most preferably in injection moulded cemented carbide and comprises two upper clearance surfaces a support surface 22 as well as them connecting first and second curved surfaces. All these surfaces and associated edges are made in the same material, i.e. preferably in injection moulded cemented carbide. Lines of intersection between the second curved surfaces or the chip flutes and the clearance surfaces form main cutting edges, preferably via reinforcing chamfers, not shown. Lines of intersection between the first curved surfaces and the chip flutes form secondary cutting edges. The chip flute can alternatively be adapted for a drill body with straight chip flutes. The cutting head preferably also comprises a coring-out surface, which reaches the center of the cutting head. The biggest diameter of the cutting head consists of the diametral distance between the radially extreme points of the secondary cutting edges. The height of the cutting head is substantially the same as said distance, in order to minimize the wear from chips on the joint between the cutting head and the drill body. The biggest diameter of the support surface 22 is preferably less than the biggest diameter of the cutting head, in order to provide clearance at machining. Flushing holes, substantially parallel with the rotational axis, run through the cutting head from the support surface 22 to the orifice in respective upper clearance surface. The flushing holes are provided on a line L, at each side of the rotational axis. The function of the drill tool is also described in applicants SE-A-9501687-9, as regards the external geometry of the drill and the clamping of the cutting head to the drill body.

The support surface 22 of the cutting head is formed in accordance with what has been described in connection with Fig. 2B except for that the support surface 22 in this case comprises the flushing channels around a central, threaded hole and that the support surface is cut by chip flutes. The direction S3 is parallel with the line L and the direction S4 is perpendicular thereto.

The drill body 42, Figs. 6A-6C, is equipped with flush channels, which follow the protruding lands of the drill along a helical path at a distance from the rotational axis. The drill body has screw shaped chip flutes or straight chip flutes and these can extend along the entire body or along a part thereof. The drill body 42 is equipped with a front surface 14 at the end facing towards the cutting head 41, which surface is provided to abut against the support surface 22 of the cutting head 41, such as described above in connection with Figs. 2A-2D. A difference relative to said earlier embodiment is that the grooves in the groove parts in the drill body 42 and the cutting head 41 must be adapted such that the flushing channels and the chip flutes are aligned with each other in the respective part.

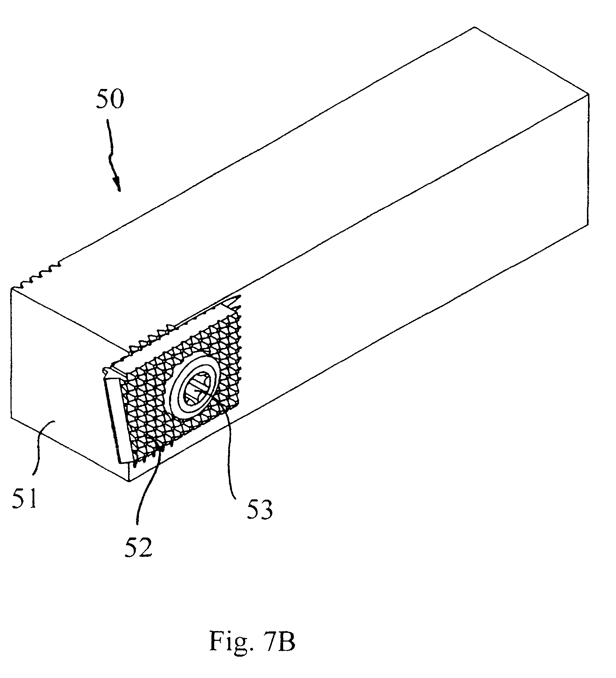

In Figs. 7A and 7B an additional embodiment of a tool according to the present invention is shown. The tool is a turning tool 50 for example for threading or grooving and comprises a holder 51, a cutting insert 52 and a screw 53. The holder 51 is a square shank and has two insert pockets for tangential mounting of the cutting insert. Each cutting insert position comprises two groove parts 16A, 16B as explained above in connection with Fig. 2A. However each groove part 16A, 16B intersects the jacket surface of the holder at only one place. The cutting insert 52 is polygonal and is provided with a hole and has broad sides provided with support surfaces as explained in connection with Fig. 2B. The grooves in the groove parts can be parallel and perpendicular, respectively, to an axis of rotation of a work piece or can be angled to obtain sufficient clearance when more than one corner portion contain a cutting edge. Since the largest surfaces of the cutting insert are provided with groove parts, which spread all over the surface, the cutting insert can be mounted on both right and left cutting insert positions. The tool is mounted by putting the support surface of the cutting insert 52 by hand against the front surface of the holder 51 in one of four possible positions. Thereby the groove directions S3 and S4 are aligned with the groove directions S1 respective S2. The screw 53 is brought through the insert hole and towards a threaded hole in the holder 51. At rotation of the screw via a key which is in engagement with the key grip, the cutting insert will be drawn firmly against the front surface, i.e. the position according to Fig. 7B has been achieved.

In Figs. 8A-8D is shown an additional embodiment of a tool according to the present invention. The tool is a tool 60 for longitudinal turning and comprises a holder 61, a round cutting insert 62, a screw 63, a shim 64 and a clamp 65. The holder 61 consists of a square shank and has a position for mounting of the shim 64. The position comprises two groove parts 16A, 16B such as been explained above in connection with Fig. 2A. The cutting insert 62 is circular and consequently has a round cutting edge and may have somewhat angled clearance surfaces. The lower side of the cutting insert is provided with a support surface such as explained in connection with Fig. 2B, which is more closely shown in Fig. 8D. The grooves in the groove parts 16A, 16B can be parallel and perpendicular, respectively, to an axis of rotation of a work piece or be angled to obtain sufficient clearance when a polygonal cutting insert for longitudinal turning shall be used. The cutting insert and the shim 64 are preferably made by injection moulded cemented carbide. The shim 64 is circular and its underside comprises like the cutting insert 62 lower side rows of grooves or pyramids. The upper side of the shim 64 is like the cutting insert position of the holder 61 equipped with two groove parts 16A, 16B. The shim furthermore has a unthreaded through-going hole. The tool is mounted by putting the lower side of the shim by hand against of the holder 61 in one of four possible positions. Thereby the groove directions S3 and S4 are aligned with the groove directions S1 and S2, respectively. The screw 63 is brought through the insert hole and against a threaded hole in the holder 61. At rotation of the screw via a key the shim is drawn firmly against the front surface. When the cutting insert 62 shall be mounted the procedure is repeated, namely that the lower side of the cutting insert is put against the upper side of the shim in one of four possible positions. Thereby the groove directions S3 and S4 are aligned with the groove directions S1 and S2, respectively. The clamp 65 then firmly clamps the cutting insert in position with the aid of a threaded hole in the holder, whereafter the position according to Fig. 8B is achieved. In an alternative embodiment the upper side of the shim is rotated 45° in relation to the lower side, and therefore such a shim allows the use of four further cutting edge portions on the round cutting insert. Naturally, the upper side of the cutting insert in a double sided embodiment can also comprise a surface which is shown on the lower side of the cutting insert 62 in Fig. 8D, wherein said surface is arranged radially somewhat inside the cutting edge on each side.

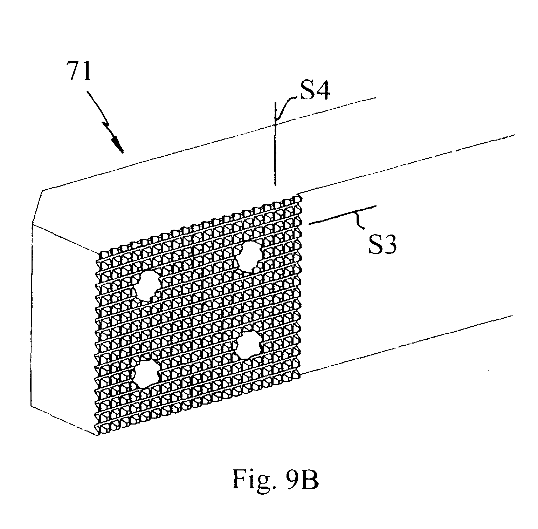

In Figs. 9A-9C is shown an additional embodiment of a tool according to the present invention. The tool is a grooving or parting tool 70 and comprises a holder 71, a blade 72, a cutting insert (not shown) and screws 73. The holder 71 consists of a square shank and has a position for mounting of the blade 72. The position comprises two groove parts such as explained above in connection with Fig. 2B, which is more closely shown in Fig. 9B, i.e. two relative to each other perpendicular rows of grooves or pyramids in the directions S3 and S4. The blade 72 has an inside which comprises two groove parts 16B which border the groove part 16A in accordance with what has been explained in connection with Fig. 2A. The grooves in the groove parts 16A, 16B are provided parallel and perpendicular, respectively, to the tool's normal feed direction. The blade 72 furthermore has four unthreaded, through-going holes. The tool is mounted by putting the inside of the blade by hand against the position of the holder 71 according to Fig. 9A. Thereby the groove directions S3 and S4 are aligned with the groove directions S1 and S2, respectively. The screws 73 are brought through holes in the blade and against threaded holes in the holder 71. At tightening of the screws the blade will be drawn firmly against the position of the holder 71. Subsequently a cutting insert is pushed into the shown insert pocket, whereafter the tool can be used in a machine for turning. An advantage with the latter tool is that the surfaces on the inside of the blade and on the holder can be machined by one and the same tool, for example by a hob.

The present invention consequently relates to a coupling between two parts for cutting machining which gives a distinct locking effect and allows transfer of large torque simultaneously as the coupling is simpler to manufacture than hitherto known couplings. At application of the coupling in connection with milling also tools of small diameters can be arranged stable and it allows simple exchange of cutting heads. At application of the coupling in connection with turning at least four cutting edges or cutting edge portions can be indexed and be distinctly held.

## Claims

1. A coupling between a first part (11;42;51;61;71) and a second part (12;41;52;64,62;72) for use in chip removing machining, wherein said coupling comprises two cooperating surfaces (14,22) and means (13;53;63,65;73) for forcing the surfaces together, wherein said surfaces are profiled with grooves (17A,17B,24A,24B) to allow locking by shape against each other,
**characterized in that** the cooperating surfaces (14,22) are provided to comprise at least four separate positions in relation to each other, and that the number of grooves (17A,17B,24A,24B) is more than the number of positions and that each surface (14,22) comprises at least two groove parts (16A,16B,23A,23B) which comprise said grooves and which parts preferably are provided substantially perpendicular to each other and **in that** one (16B) of the groove parts in the first part (11;42;51;61;71) borders another groove part (16A).

2. Coupling according to claim 1,
**characterized in that** the groove parts (23A,23B) in the second part (12;41;52;64,62;72) wholly transverse each other.

3. Coupling according to claim 1 or 2,
**characterized in that** the grooves (17A,17B,24A,24B) in the respective groove part (16A,16B,23A,23B) have an identical basic form and are essentially V-shaped and displaced in a plane in relation to each other in a mounted condition and that the grooves have a width (W) and are displaced a half width (W/2) in said plane.

4. Coupling according to claim 1, 2 or 3,
**characterized in that** the groove parts (16A,16B,23A,23B) cover at least 80%, preferably 90-100%, of accessible area of the associated surface (14,22) and that the grooves in each surface (14,22) have two main directions (S1,S2,S3,S4), which are perpendicular to each other and that the coupling is intended for rotary and/or stationary tools.

5. Tool comprising a coupling as defined in claim 1 between a cutting head (12;41;52;62;72) or a shim (64) and a holder (11;42;51;61;71), wherein the cutting head/the shim and the holder comprise two cooperating surfaces (14,22) and means (13;53;63,65;73) for forcing the surfaces together, wherein said surfaces are profiled with grooves for allowing locking by shape against each other,
**characterized in that** the cooperating surfaces (14,22) are provided to comprise at least four separate positions in relation to each other, wherein the number of grooves(17A,17B,24A,24B) is more than the number of positions and that each surface (14,22) comprises at least two groove parts (16A,16B,23A,23B) which comprise said grooves and which parts are provided preferably substantially perpendicular to each other and **in that** one (16B) of the groove parts in the first part (11;42;51;61;71) borders another groove part (16A).

6. Tool according to claim 5,
**characterized in that** the groove parts (23A,23B) in the second part (12;41;52;64,62;72) wholly transverse each other.

7. Tool according to claim 5 or 6,
**characterized in that** the grooves (17A,17B,24A,24B) in the respective groove part (16A,16B,23A,23B) are essentially V-shaped and displaced in a plane in relation to each other as mounted and that the grooves have a width (W) as well as are displaced a half width (W/2) in said plane.

8. Tool according to claim 5, 6 or 7,
**characterized in that** the groove parts (16A,16B,23A,23B) cover at least 80%, preferably 90-100%, of accessible area of the associated surface (14,22) and that the grooves in each surface (14,22) have two main directions (S1,S2,S3,S4) which are perpendicular to each other and that the coupling is intended for rotary and/or stationary tools.

9. Tool as defined in claim 5 having (12;41;52;62;72) a holder and a cutting head, wherein the cutting head and the holder comprise cooperating surfaces (14,22) and means for forcing the support surfaces together, wherein the surfaces are profiled with grooves (24A,24B) for allowing locking by shape against each other,
**characterized in that** the surface (22) of the cutting head (12;41;52;62;72) is provided to comprise at least four separate positions,
wherein the number of grooves is more than the number of positions and that said surface (22) comprises at least two groove parts (23A,23B) which comprise said grooves and which parts preferably are provided substantially perpendicular to each other and **in that** the groove parts (23A,23B) in the cutting head (12;41;52;64,62;72) wholly transverse each other.

10. Tool according to claim 9,
**characterized in that** the grooves (24A,24B) in the respective groove part (23A,23B) are identical and essentially V-shaped and of that the grooves have a width (w).

11. Tool according to claim 9 or 10,
**characterized in that** the groove parts (23A,23B) cover at least 80%, preferably 90-100%, of accessible area of the associated surface (14,22) and that the grooves in each surface (14,22) have two main directions (S1,S2,S3,S4), which are perpendicular to each other.

12. Tool as defined in claim 5 having a holder for connection to a cutting head or a shim, wherein the cutting head/the shim and the holder (11;42;51;61;71) comprise two cooperating surfaces (14) and means for forcing the surfaces together, wherein said surfaces are profiled with grooves for allowing locking by shape to each other,
**characterized in that** the surface (14) of the holder is provided to comprise at least four separate positions, wherein the number of grooves(17A,17Bb) is more than the number of positions and that the surface (14) comprises at least two groove parts (16A,16B) which comprise said grooves and which parts preferably are provided substantially perpendicular to each other and **in that** one (16B) of the groove parts in the holder (11;42;51;61;71) borders another groove part (16A).

13. Tool according to claim 12,
**characterized in that** the grooves (17A,17Bb) in the respective groove part (16A,16B) have identical basic shape and are essentially V-shaped and that the grooves have a width (W).

14. Tool according to claim 12 or 13,
**characterized in that** the groove parts (16A,16B) cover at least 80%, preferably 90-100%, of accessible area of the associated surface (14) and that the grooves in the surface (14) have two main directions (S1,S2), which are perpendicular to each other.

15. Tool according to claim 5 having a shim for connection to a holder, wherein the shim (64) and the holder comprise cooperating surfaces (14) and means for forcing the support surfaces together, wherein the surfaces are profiled with grooves for allowing locking by shape against each other, /wherein said shim has a lower side (22) and an upper side (14),
**characterized in that** the lower side (22) of the shim (64) is provided to comprise at least four separate positions, wherein the number of grooves is more than the number of positions and that said side (22) comprises at least two groove parts (23A,23B) which comprise said grooves and which parts are provided preferably substantially perpendicular to each other.

16. Tool according to claim 15,
**characterized in that** the upper side (14) of the shim (64) is provided to comprise at least four separate positions, wherein the number of grooves is more than the number of positions and that said side (14) comprises at least two groove parts (16A,16B) which comprise said grooves and which parts are provided preferably substantially perpendicular to each other.

17. Method for coupling two tool parts together in an interface comprising of two cooperating surfaces (14,22) and means (13;53;63,65;73) for forcing the surfaces together, wherein the surfaces are profiled with grooves (17A,17B,24A,24B) for allowing locking by shape against each other,
**characterized in that** the method comprises the following steps:
- providing the cooperating surfaces (14,22) with at least four separate possible positions in relation to each other,
- providing the number of grooves (17A,17B,24A,24B) so that they become more than the number of positions,
- providing each surface (14,22) such that it comprises at least two groove parts (16A,16B,23A,23B) which comprise said grooves and which parts are arranged preferably substantially perpendicular to each other,
- providing one (16B) of the groove parts in one surface such that it borders another groove part (16A) of the same surface,
- put the tool parts in one position of the four possible positions and
- pull the surfaces (14,22) together by means, such that the shapes of the support surfaces lock each other in a fixed position.

## Patentansprüche

1. Kupplung zwischen einem ersten Teil (11; 42; 51; 61; 71) und einem zweiten Teil (12; 41; 52; 64; 62; 72) für die Verwendung beim spanentfemenden Bearbeiten, wobei die Kupplung zwei zusammenwirkende Oberflächen (14; 22) und Mittel (13; 53; 63; 65; 73) aufweist, um die Oberflächen zusammenzudrücken, wobei die Oberflächen mit Nuten (17A; 17B, 24A, 24B) profiliert sind, um einen Formschluß gegeneinander zu erlauben, **dadurch gekennzeichnet, daß** die zusammenwirkenden Oberflächen (14; 22) vorgesehen sind, um mindestens vier separate Positionen bezüglich einander zu haben, und daß die Anzahl von Nuten (17A; 17B; 24A, 24B) größer ist als die Anzahl von Positionen und daß jede Oberfläche (14; 22) mindestens zwei Nutenteile (16A; 16B, 23A, 23B) aufweist, welche die Nuten aufweisen, und wobei die Teile vorzugsweise im wesentlichen senkrecht zueinander vorgesehen sind, und daß eines (16B) der Nutenteile in dem ersten Teil (11; 42; 51; 61; 71) an ein anderes Nutenteil (16A) angrenzt.

2. Kupplung nach Anspruch 1, **dadurch gekennzeichnet, daß** die Nutenteile (23A; 23B) in dem zweiten Teil (12; 41; 52; 64; 62; 72) einander ganz queren.

3. Kupplung nach Anspruch 1 oder 2, **dadurch gekennzeichnet, daß** die Nuten (17A; 17B, 24A, 24B) in dem betreffenden Nutenteil (16A; 16B, 23A, 23B) eine identische Basisform haben und im wesentlichen V-förmig sind und im eingebauten Zustand in einer Ebene zueinander versetzt sind und daß die Nuten eine Breite (W) haben und um eine halbe Breite (W/2) in der Ebene versetzt sind.

4. Kupplung nach Anspruch 1, 2 oder 3, **dadurch gekennzeichnet, daß** die Nutenteile (16A; 16B, 23A, 23B) mindestens 80%, vorzugsweise 90 - 100% der zugänglichen Fläche der zugeordneten Oberfläche (14; 22) abdecken und daß die Nuten in jeder Oberfläche (14; 22) zwei Hauptrichtungen (S1; S2, S3, S4) haben, die zueinander senkrecht sind, und daß die Kupplung für Drehwerkzeuge und/oder stationäre Werkzeuge vorgesehen ist.

5. Werkzeug mit einer Kupplung nach Anspruch 1 zwischen einem Schneidkopf (12; 41; 52; 62; 72) oder einem Abstandsstück (64) und einem Halter (11; 42, 51; 61; 71), wobei der Schneidkopf/das Abstandsstück und der Halter zwei zusammenwirkende Oberflächen (14; 2) und Mittel (13; 53; 63; 65; 73) aufweisen, um die Oberflächen zusammenzudrücken, wobei die Oberflächen mit Nuten profiliert sind, um einen Formschluß gegeneinander zu erlauben, **dadurch gekennzeichnet, daß** die zusammenwirkenden Oberflächen (14; 22) vorgesehen sind, um mindestens vier separate Positionen zueinander aufzuweisen, wobei die Anzahl der Nuten (17A; 17B, 24A, 24B) größer ist als die Anzahl der Positionen, und daß jede Oberfläche (14; 22) mindestens zwei Nutenteile (16A, 16B, 23A; 23B) aufweist, welche die Nuten aufweisen, wobei die Teile vorzugsweise im wesentlichen senkrecht zueinander vorgesehen sind, und daß eines (16B) der Nutenteile in dem ersten Teil (11; 42; 51; 61, 71) an das andere Nutenteil (16A) angrenzt.

6. Werkzeug nach Anspruch 5, **dadurch gekennzeichnet, daß** die Nutenteile (23A; 23B) in dem zweiten Teil (12; 41; 52; 64; 62; 72) einander ganz queren.

7. Werkzeug nach Anspruch 5 oder 6, **dadurch gekennzeichnet, daß** die Nuten (17A; 17B; 24A, 24B) in dem betreffenden Nutenteil (16A, 16B; 23A; 23B) im wesentlichen V-förmig und im eingebauten Zustand in einer Ebene zueinander versetzt sind und daß die Nuten eine Breite (W) haben sowie um eine halbe Breite (W/2) in der Ebene versetzt sind.

8. Werkzeug nach Anspruch 5, 6 oder 7, **dadurch gekennzeichnet, daß** die Nutenteile (16A; 16B, 23A, 23B) mindestens 80%, vorzugsweise 90 - 100% der zugänglichen Fläche der zugeordneten Oberfläche (14; 22) bedecken und daß die Nuten in jeder Oberfläche (14; 22) zwei Hauptrichtungen (S1; S2; S3; S4) haben, die zueinander senkrecht sind, und daß die Kupplung für Drehwerkzeuge und/oder stationäre Werkzeuge vorgesehen ist.

9. Werkzeug nach Anspruch 5 mit einem Halter und einem Schneidkopf (12; 41; 52; 62; 72), wobei der Schneidkopf und der Halter zusammenwirkende Oberflächen (14; 22) und Mittel aufweisen, um die Stützoberflächen zusammenzudrücken, wobei die Oberflächen mit Nuten (24A, 24B) profiliert sind, um einen Formschluß gegeneinander zu erlauben, **dadurch gekennzeichnet, daß** die Oberfläche (22) des Schneidkopfes (12; 41; 52; 62; 72) vorgesehen ist, um mindestens vier separate Positionen aufzuweisen, wobei die Anzah) der Nuten größer ist als die Anzahl der Positionen, und daß die Oberfläche (22) mindestens zwei Nutenteile (23A; 23B) aufweist, welche die Nuten aufweisen, wobei die Teile vorzugsweise im wesentlichen senkrecht zueinander vorgesehen sind, und daß die Nutenteile (23A, 23B) in dem Schneidkopf (12; 41; 52; 64; 62; 72) einander ganz queren.

10. Werkzeug nach Anspruch 9, **dadurch gekennzeichnet, daß** die Nuten (24A, 24B) in dem entsprechenden Nutenteil (23A, 23B) identisch und im wesentlichen V-förmig sind und daß die Nuten eine Breite (w) haben.

11. Werkzeug nach Anspruch 9 oder 10, **dadurch gekennzeichnet, daß** die Nutenteile (23A, 23B) mindestens 80%, vorzugsweise 90 - 100% der zugänglichen Fläche der zugeordneten Oberfläche (14; 22) abdecken und daß die Nuten in jeder Oberfläche (14; 22) zwei Hauptrichtungen (S1; S2; S3; S4) haben, die senkrecht zueinander sind.

12. Werkzeug nach Anspruch 5 mit einem Halter zum Verbinden mit einem Schneidkopf oder einem Abstandsstück, wobei der Schneidkopf/das Abstandsstück und der Halter (11; 42; 51; 61; 71) zwei zusammenwirkende Oberflächen (14) und Mittel aufweisen, um die Oberflächen zusammenzudrücken, wobei die Oberflächen mit Nuten profiliert sind, um den Formschluß miteinander zu erlauben, **dadurch gekennzeichnet, daß** die Oberfläche (14) des Halters vorgesehen ist, um mindestens vier separate Positionen aufzuweisen, wobei die Anzahl der Nuten (17A; 17B) größer ist als die Anzahl der Positionen, und daß die Oberfläche (14) mindestens zwei Nutenteile (16A; 16B) aufweist, welche die Nuten aufweisen, wobei die Teile vorzugsweise im wesentlichen senkrecht zueinander vorgesehen sind, und daß eines (16B) der Nutenteile in dem Halter (11; 42; 51; 61; 71) an ein anderes Nutenteil (16A) angrenzt.

13. Werkzeug nach Anspruch 12, **dadurch gekennzeichnet, daß** die Nuten (17A; 17B) in dem entsprechenden Nutenteil (16A; 16B) identische Basisform haben und im wesentlichen V-förmig sind und die Nuten eine Breite (W) haben.

14. Werkzeug nach Anspruch 12 oder 13, **dadurch gekennzeichnet, daß** die Nutenteile (16A; 16B) mindestens 80%, vorzugsweise 90 - 100% der zugänglichen Fläche der zugeordneten Oberfläche (14) abdecken und daß die Nuten in der Oberfläche (14) zwei Hauptrichtungen (S1; S2) haben, die senkrecht zueinander sind.

15. Werkzeug nach Anspruch 5 mit einem Abstandsstück zum Verbinden an einem Halter, wobei das Abstandsstück (64) und der Halter zusammenwirkende Oberflächen (14) und Mittel haben, um die Stützoberflächen zusammenzudrücken, wobei die Oberflächen mit Nuten profiliert sind, um einen Formschluß gegeneinander zu ermöglichen, wobei das Abstandsstück eine untere Seite (22) und eine obere Seite (14) hat, **dadurch gekennzeichnet, daß** die untere Seite (22) des Abstandsstückes (64) vorgesehen ist, um mindestens vier separate Positionen aufzuweisen, wobei die Anzahl der Nuten größer ist als die Anzahl der Positionen, und daß die Seite (22) mindestens zwei Nutenteile (23A, 23B) aufweist, welche die Nuten aufweisen, wobei die. Teile vorzugsweise im wesentlichen senkrecht zueinander vorgesehen sind.

16. Werkzeug nach Anspruch 15, **dadurch gekennzeichnet, daß** die obere Seite (14) des Abstandsstückes (64) vorgesehen ist, um mindestens vier separate Positionen aufzuweisen, wobei die Anzahl der Nuten größer ist als die Anzahl der Positionen, und daß die Seite (14) mindestens zwei Nutenteile (16A; 16B) aufweist, welche die Nuten aufweisen, wobei die Teile vorzugsweise im wesentlichen senkrecht zueinander vorgesehen sind.

17. Verfahren zum Zusammenkuppeln zweier Werkzeugteile miteinander in einer Grenzfläche, mit zwei zusammenwirkenden Oberflächen (14; 22) und Mitteln (13; 53; 63; 65; 73) zum Zusammendrücken der Oberflächen, wobei die Oberflächen mit Nuten (17A; 17B; 24A; 24B) profiliert sind, um einen Formschluß gegeneinander zu erlauben, **dadurch gekennzeichnet, daß** das Verfahren die folgenden Schritte aufweist:
- Versehen der zusammenwirkenden Oberflächen (14; 22) mit mindestens vier separaten möglichen Positionen zueinander,
- Vorsehen der Anzahl von Nuten (17A; 17B, 24A; 24B) derart, daß die Anzahl größer als die Anzahl von Positionen wird,
- Vorsehen jeder Oberfläche (14; 22) derart, daß sie mindestens zwei Nutenteile (16A; 126B; 23A; 23B) aufweist, welche die Nuten aufweisen, wobei die Teile vorzugsweise im wesentlichen senkrecht zueinander angeordnet werden,
- Vorsehen eines (16B) der Nutenteile in einer Oberfläche derart, daß es an das andere Nutenteil (16A) derselben Oberfläche angrenzt,
- Bringen der Werkzeugteile in eine Position der vier möglichen Positionen und
- Zusammenziehen der Oberflächen (14; 22) durch Mittel derart, daß die Gestaltungen der Stützoberflächen in einer festen Position einander blockieren.

## Revendications

1. Couplage entre une première partie (11 ; 42 ; 51 ; 61 ; 71) et une seconde partie (12 ; 41 ; 52 ; 64, 62 ; 72) en vue d'une utilisation dans un usinage par enlèvement de copeaux, dans lequel ledit couplage comprend deux surfaces coopérantes (14, 22) et des moyens (13 ; 53; 63, 65 ; 73) destinés à contraindre mutuellement les surfaces, dans lequel lesdites surfaces sont profilées avec des rainures (17A, 17B, 24A, 24B) afin de permettre un blocage par forme les unes contre les autres,
**caractérisé en ce que** les surfaces coopérantes (14, 22) sont prévues pour comprendre au moins quatre positions séparées les unes par rapport aux autres, et **en ce que** le nombre de rainures (17A, 17B, 24A, 24B) est supérieur au nombre de positions et **en ce que** chaque surface (14, 22) comprend au moins deux parties de rainures (16A, 16B, 23A, 23B) qui comprennent lesdites rainures et lesquelles parties sont de préférence disposées sensiblement perpendiculairement les unes aux autres et **en ce que** l'une (16B) des parties de rainures dans la première partie (11 ; 42 ; 51 ; 61 ; 71) limite une autre partie de rainures (16A).

2. Couplage selon la revendication 1,
**caractérisé en ce que** les parties de rainures (23A, 23B) dans la seconde partie (12 ; 41 ; 52; 64, 62 ; 72) sont entièrement transverses les unes par rapport aux autres.

3. Couplage selon la revendication 1 ou 2,
**caractérisé en ce que** les rainures (17A, 17B, 24A, 24B) dans la partie de rainures respective (16A, 16B, 23A, 23B) présentent une forme de base identique et sont essentiellement en forme de V et sont déplacées dans un plan les unes par rapport aux autres dans un état monté et **en ce que** les rainures présentent une largeur (W) et sont déplacées dune demie largeur (W/2) dans ledit plan.

4. Couplage selon la revendication 1, 2 ou 3,
**caractérisé en ce que** les parties de rainures (16A, 16B, 23A, 23B) recouvrent au moins 80 %, de préférence 90 à 100 %, de la surface accessible de la face associée (14, 22) et **en ce que** les rainures dans chaque surface (14, 22) présentent deux directions principales (S1, S2, S3, S4), qui sont perpendiculaires l'une à l'autre et **en ce que** le couplage est prévu pour des outils rotatifs et/ou fixes.

5. Outil comprenant un couplage selon la revendication 1 entre une tête de coupe (12 ; 41 ; 52 ; 62 ; 72) ou une cale (64) et un porte-outil (11 ; 42 ; 51 ; 61 ; 71) dans lequel la tête de coupe/la cale et le porte-outil comprennent deux surfaces coopérantes (14, 22) et des moyens (13 ; 53 ; 63, 65 ; 76) destinés à contraindre les surfaces ensemble, dans lequel lesdites surfaces sont profilées avec des rainures afin de permettre un blocage par forme les unes contre les autres,
**caractérisé en ce que** les surfaces coopérantes (14, 22) sont prévues pour comprendre au moins quatre positions séparées les unes par rapport aux autres, et dans lequel le nombre de rainures (17A, 17B, 24A, 24B) est supérieur au nombre de positions et **en ce que** chaque surface (14, 22) comprend au moins deux parties de rainures (16A, 16B, 23A, 23B) qui comprennent lesdites rainures et lesquelles parties sont disposées de préférence sensiblement perpendiculairement l'une à l'autre et **en ce que** l'une (16B) des parties de rainures dans la première partie (11 ; 42 ; 51 ; 61 ; 71) limite une autre partie de rainures (16A).

6. Outil selon la revendication 5,
**caractérisé en ce que** les parties de rainures (23A, 23B) dans la seconde partie (12 ; 41 ; 52 ; 64, 62 ; 72) sont entièrement transverses les unes par rapport aux autres.

7. Outil selon la revendication 5 ou 6,
**caractérisé en ce que** les rainures (17A, 17B, 24A, 24B) dans la partie de rainures respective (16A, 16B, 23A, 23B) sont essentiellement en forme de V et sont déplacées dans un plan les unes par rapport aux autres telles qu'elles sont montées et **en ce que** les rainures présentent une largeur (W) de même qu'elles sont déplacées d'une demie largeur (W/2) dans ledit plan.

8. Outil selon la revendication 5, 6 ou 7
**caractérisé en ce que** les parties de rainures (16A, 16B, 23A, 23B) recouvrent au moins 80 %, de préférence 90 à 100 %, de la surface accessible de la surface associée (14, 22) et **en ce que** les rainures dans chaque surface (14, 22) présentent deux directions principales (S1, S2, S3, S4), qui sont perpendiculaires l'une à l'autre et **en ce que** le couplage est prévu pour des outils rotatifs et/ou fixes.

9. Outil selon la revendication 5 comprenant un porte-outil et une tête de coupe (12 ; 41 ; 52 ; 62 ; 72), dans lequel la tête de coupe et le porte-outil comprennent des surfaces coopérantes (14, 22) et des moyens destinés à contraindre mutuellement les surfaces de support, dans lequel les surfaces sont profilées avec des rainures (24A, 24B) en vue de permettre un blocage par forme les unes contre les autres,
**caractérisé en ce que** la surface (22) de la tête de coupe (12 ; 41 ; 52 ; 62 ; 72) est prévue pour comprendre au moins quatre positions séparées, où le nombre de rainures est supérieur au nombre de positions et **en ce que** ladite surface (22) comprend au moins deux parties de rainures (23A, 23B) qui comprennent lesdites rainures et lesquelles parties sont de préférence disposées sensiblement perpendiculairement les unes par rapport aux autres et **en ce que** les parties de rainures (23A, 23B) dans la tête de coupe (12 ; 41 ; 52 ; 64, 62 ; 72) sont entièrement transverses l'une par rapport à l'autre.

10. Outil selon la revendication 9,
**caractérisé en ce que** les rainures (24A, 24B) dans la partie de rainures respective (23A, 23B) sont identiques et essentiellement en forme de V et **en ce que** les rainures présentent une largeur (W).

11. Outil selon la revendication 9 ou 10,
**caractérisé en ce que** les parties de rainures (23A, 23B) recouvrent au moins 80 %, de préférence 90 à 100 %, de la surface accessible de la face associée (14, 22) et **en ce que** les rainures danschaque surface (14, 22) présentent deux directions principales (S1, S2, S3, S4), qui sont perpendiculaires l'une à l'autre.

12. Outil selon la revendication 5, comportant un porte-outil destiné au raccordement à une tête de coupe ou à une cale dans lequel la tête de coupe/la cale et le porte-outil (11 ; 42 ; 51 ; 61 ; 71) comprennent deux surfaces coopérantes (14) et des moyens destinés à contraindre mutuellement les surfaces, dans lequel lesdites surfaces sont profilées avec des rainures en vue de permettre un blocage par forme les unes avec les autres,
**caractérisé en ce que** la surface (14) du porte-outil est prévue pour comprendre au moins quatre positions séparées, dans lequel le nombre de rainures (17A, 17B) est supérieur au nombre de positions et **en ce que** la surface (14) comprend au moins deux parties de rainures (16A, 16B) qui comprennent lesdites rainures et lesquelles parties sont de préférence disposées sensiblement perpendiculaires l'une par rapport à l'autre et **en ce que** l'une (16B) des parties de rainures dans le porte-outil (11 ; 42 ; 51 ; 61 ; 71) limite une autre partie de rainures (16A).

13. Outil selon la revendication 12,
**caractérisé en ce que** les rainures (17A, 17B) dans la partie de rainures respective (16A, 16B) présentent une forme de base identique et sont essentiellement en forme de V et **en ce que** les rainures présentent une largeur (W).

14. Outil selon la revendication 12 ou 13
**caractérisé en ce que** les parties de rainures (16A, 16B) recouvrent au moins 80 %, de préférence 90 à 100 %, de la surface accessible de la surface associée (14) et **en ce que** les rainures dans la surface (14) présentent deux directions principales (S1, S2), qui sont perpendiculaires Tune à l'autre.

15. Outil selon la revendication 5, comprenant une cale, en vue d'un raccordement à un porte-outil, dans lequel la cale (64) et le porte-outil comprennent des surfaces coopérantes (14) et des moyens destinés à contraindre mutuellement les surfaces de support, dans lequel les surfaces sont profilées avec des rainures en vue de permettre un blocage par forme les unes contre les autres, dans lequel ladite cale présente un côté inférieur (22) et un côté supérieur (14),
**caractérisé en ce que** le côté inférieur (22) de la cale (64) est prévu pour comprendre au moins quatre positions séparées, dans lequel le nombre de rainures est supérieur au nombre de positions et **en ce que** ledit côté (22) comprend au moins deux parties de rainures (23A, 23B) qui comprennent lesdites rainures et lesquelles parties sont disposées de préférence sensiblement perpendiculaires Tune à l'autre.

16. Outil selon la revendication 15,
**caractérisé en ce que** le côté supérieur (14) de la cale (64) est prévu pour comprendre au moins quatre positions séparées, dans lequel le nombre de rainures est supérieur au nombre de positions et **en ce que** ledit côté (14) comprend au moins deux parties de rainures (16A, 16B) qui comprennent lesdites rainures et lesquelles parties sont disposées de préférence sensiblement perpendiculaires l'une à l'autre.

17. Procédé decouplage de deux parties d'outil ensemble dans une interface comprenant deux surfaces coopérantes (14, 22) et des moyens (13 ; 53 ; 63, 65 ; 73) destinés à contraindre mutuellement les surfaces, dans lequel les surfaces sont profilées avec des rainures (17A, 17B, 24A, 24B) en vue de permettre un blocage par forme les unes contre les autres,
**caractérisé en ce que** le procédé comprend les étapes suivantes :
- réaliser les surfaces coopérantes (14, 22) avec au moins quatre positions possibles séparée, en relation les unes par rapport aux autres,
- prévoir le nombre de rainures (17A, 17B, 24A, 24B) de sorte qu'elles deviennent supérieures au nombre de positions,
- prévoir chaque surface (14, 22) de sorte qu'elles comprenne au moins deux parties de rainures (16A, 16B, 23A, 23B) qui comprennent lesdites rainures et lesquelles parties sont disposées de préférence sensiblement perpendiculairement Tune à l'autre,
- réaliser l'une (16B) des parties de rainures dans une surface de sorte qu'elle limite une autre partie de rainures (16A) de la même surface,
- déposer les parties d'outil dans une position parmi les quatre positions possibles et
- tirer mutuellement les surfaces (14, 22) par des moyens, de sorte que les formes des surfaces de support se bloquent l'une l'autre dans une position fixe.
